**Europäisches Patentamt**

**European Patent Office**

**Office européen des brevets**

(19)

(11) Veröffentlichungsnummer : **0 373 406 B1**

(12) **EUROPÄISCHE PATENTSCHRIFT**

(45) Veröffentlichungstag der Patentschrift :
**18.03.92 Patentblatt 92/12**

(51) Int. Cl.⁵ : **A01D 41/14**

(21) Anmeldenummer : **89121780.4**

(22) Anmeldetag : **24.11.89**

(54) **Selbstfahrender Mähdrescher mit geteiltem Schneidwerk.**

(30) Priorität : **16.12.88 DE 3842400**

(43) Veröffentlichungstag der Anmeldung :
**20.06.90 Patentblatt 90/25**

(45) Bekanntmachung des Hinweises auf die
Patenterteilung :
**18.03.92 Patentblatt 92/12**

(84) Benannte Vertragsstaaten :
**AT BE DE ES FR GB IT NL**

(56) Entgegenhaltungen :
**EP-A- 0 326 836**
**DE-A- 1 482 929**
**DE-A- 2 026 190**
**US-A- 3 521 433**

(73) Patentinhaber : **CLAAS OHG**
**Postfach 1140 Münsterstrasse 31**
**W-4834 Harsewinkel- 1 (DE)**

(72) Erfinder : **Adam, Bernhard**
**Eiglasdorf 3**
**W-8481 Reuth (DE)**

(74) Vertreter : **Patentanwälte Dipl.-Ing. E. Eisele**
**Dr.-Ing. H. Otten**
**Seestrasse 42**
**W-7980 Ravensburg (DE)**

EP 0 373 406 B1

**Beschreibung**

Die Erfindung betrifft einen selbstfahrenden Mähdrescher mit einem zweiteiligen, frontseitigen Schneidwerk.

Um möglichst große Durchsatzmengen zu erzielen, ist die Gesamtbreite der Schneidwerke von Mähdreschern heute wesentlich größer als die zulässige Transportbreite auf öffentlichen Straßen, die in Deutschland 3 m beträgt. Aus diesem Grunde müssen die Schneidwerke für den Straßentransport durch geeignete Verlagerung am Mähdrescher auf die zulässige Transportbreite gebracht werden.

Eine Mähdrescherkonstruktion der einleitend bezeichneten Art ist beispielsweise aus der DE-A-14 82 896 bekannt. Hiernach werden die Schneidwerkteile vertikal hochgeklappt. Dadurch läßt sich zwar die zulässige Gesamttransportbreite erreichen, die hochgeklappten Schneidwerkteile ragen jedoch in das Sichtfeld des Fahrers hinein.

Demgegenüber beschreibt die ältere, aber nachveröffentlichte EP-A-326 836 Stand der Technik nach Artikel 54(3) einen Mäh- und/oder Aufnahmevorsatz für einen Mähdrescher, bei dem eines der Vorsatzteile um eine in Fahrtrichtung weisende Achse schwenkbar ist und die Schwenkachse etwa mittig zur Breite des Mähdreschers oberhalb der Vorsatzteile an diesen angeordnet ist, während das andere Vorsatzteil an einem vom Mähdrescher getragenen Grundrahmen in Querrichtung verschiebbar gelagert ist, und das eine Vorsatzteil die Mittel trägt, die anderenendes an das andere Vorsatzteil zur Durchführung von dessen Schwenkbewegung anschließen. Durch diese Anordnung wird eine einfache Verstelleinrichtung geschaffen und das Blickfeld des Fahrers wird nicht eingeschränkt.

Der Erfindung liegt die Aufgabe zugrunde, einen Mähdrescher mit einem solchen Schneidwerk weiter zu verbessern hinsichtlich des Schwenkantriebs für den schwenk- oder klappbaren Schneidwerkteil und hinsichtlich der Stabilität beider beweglicher Schneidwerkteile.

Diese Aufgabe wird ausgehend von dem einleitend bezeichneten Mähdrescher unter Berücksichtigung der Offenbarung der nachveröffentlichten EP-A-326 836 durch die Merkmale des Patentanspruchs 1 gelöst.

Dieser Vorschlag stellt einen guten Kompromiß dar zwischen dem Streben nach möglichst großer Arbeitsbreite einerseits und einem betriebssicheren 180°-Klappmechanismus andererseits. Die geringe Verkürzung des klappbaren Schneidwerkteils ergibt eine Verringerung der Antriebskräfte und erhöht die Stabilität in der Arbeits- und in der Transportstellung unter Beibehaltung einer Gesamtarbeitsbreite, die wesentlich größer als die Straßentransportbreite ist.

Hinsichtlich der konstruktiven Ausbildung im einzelnen wird vorgeschlagen, daß eine mit Spindelmuttern zusammenwirkende quer verlaufende horizontale Spindel als Antriebsorgan für den quer verschiebbaren Schneidwerkteil vorgesehen ist. Zweckmäßigerweise ist dieser Schneidwerkteil in Gleitstücke eingehängt, die mittels Rollen längs der vorderen Oberkante eines frontseitig angeordneten Schrägfördererkanals geführt sind, wobei eine Verspanneinrichtung zur bodenseitigen Verspannung wenigstens dieses Schneidwerkteils mit dem Schrägfördererkanal vorgesehen ist. Auch in seiner zur Mitte hin verschobenen Transportstellung hat der große Schneidwerkteil somit eine gleichgeartete feste Verbindung mit dem Längsfördererkanal wie in der Arbeitsstellung. Er ist ohne weiteres im Stande, das zusätzliche Gewicht des darüber geklappten Schneidwerkteils aufzunehmen und diesen sicher abzustützen.

Im Hinblick auf die Erreichung einer möglichst geringen Höhe der Sichtkante, die durch die Schneidwerksmulde des oberen Schneidwerks in der Transportstellung gebildet wird, verlangt die Unterbringung der Haspeln ein besonderes Augenmerk. Wie an sich bekannt, weist jeder Schneidwerkteil eine Haspel mit einer der jeweiligen Schnittbreite entsprechenden Länge auf, die an nach vorn weisenden, auf und ab schwenkbaren Tragarmen gelagert sind. Es wird vorgeschlagen, daß die eine Haspel an ihren Tragarmen so weit nach vorn zum Tragarmende hin und die andere Haspel an ihrem Tragarm so weit nach hinten zum Tragarmlager hin verstellbar ist, daß die Haspeln in eine Transportstellung gebracht werden können, in der sie im wesentlichen in Fahrtrichtung hintereinander angeordnet sind. Hintereinander schließt nicht aus, daß ein gewisser Höhenunterschied zwischen den Haspeln besteht. Zur Längsverstellung der Lager an den Tragarmen vor dem Hochklappen des kürzeren Schneidwerks können prinzipiell die hydraulischen Verstellvorrichtungen benutzt werden, die an sich bekannt und auch für den Erntebetrieb erforderlich sind, jedoch müssen die Verstellhübe besonders groß sein. Es kann auch erforderlich sein, die Tragarme einer Haspel länger als üblich zu machen.

Grundsätzlich sind die Antriebsanordnungen für den Verschiebe- und den Klappvorgang unabhängig voneinander, so daß der Maschinenführer beide Verstellvorgänge gleichzeitig durchführen kann. Das verringert nicht nur die insgesamt erforderliche Umrüstzeit, sondern dient auch der Erhaltung des Fahrzeuggleichgewichts in Querrichtung. Mit Hilfe einer Programmsteuerung können gewünschtenfalls die beiden Bewegungsvorgänge selbsttätig koordiniert werden.

Ein Ausführungsbeispiel der Erfindung wird nachfolgend anhand der Zeichnung erläutert. Im einzelnen zeigt

Fig. 1 die Vorderansicht eines Mähdreschers mit asymmetrisch geteiltem Schneidwerk in Arbeitsstellung,

Fig. 2 den Mähdrescher nach Fig. 1 mit dem Schneidwerk in einer Zwischenstellung,

Fig. 3 den Mähdrescher nach Fig. 1 mit dem Schneidwerk in Transportstellung,

Fig. 4 eine Seitenansicht des vorderen Teils des Mähdreschers in der Transportstellung wie Fig. 3,

Fig. 5 eine Seitenansicht des Schneidwerks und des anschließenden Teils eines Schrägfördererkanals in größerem Maßstab und teilweise aufgeschnitten nach der Schnittlinie V-V und

Fig. 6 eine Draufsicht des Schneidwerks in Arbeitsstellung sowie der Antriebsvorrichtung zur Querverschiebung.

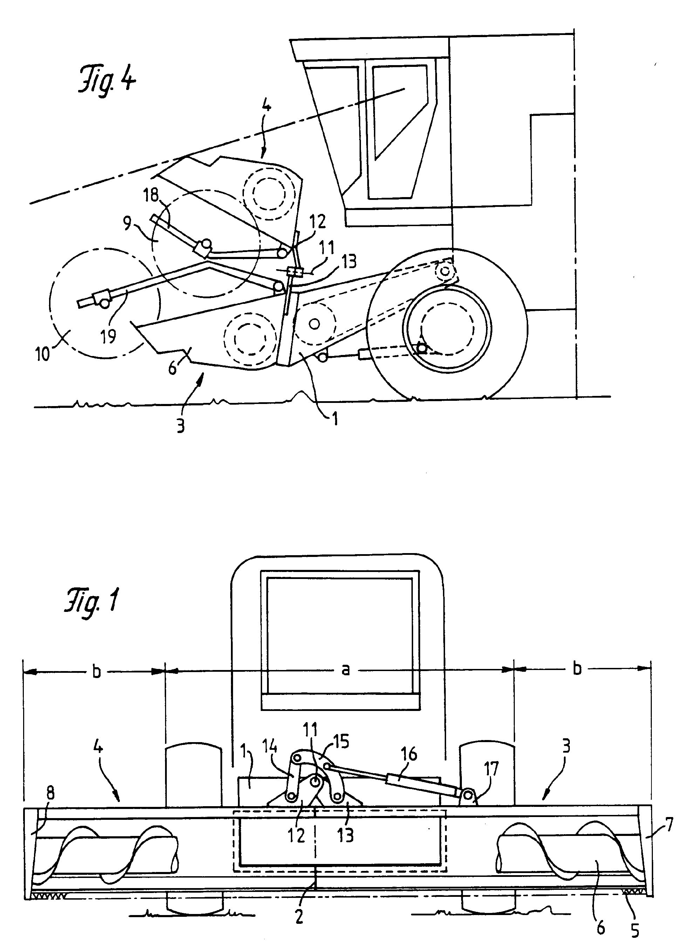

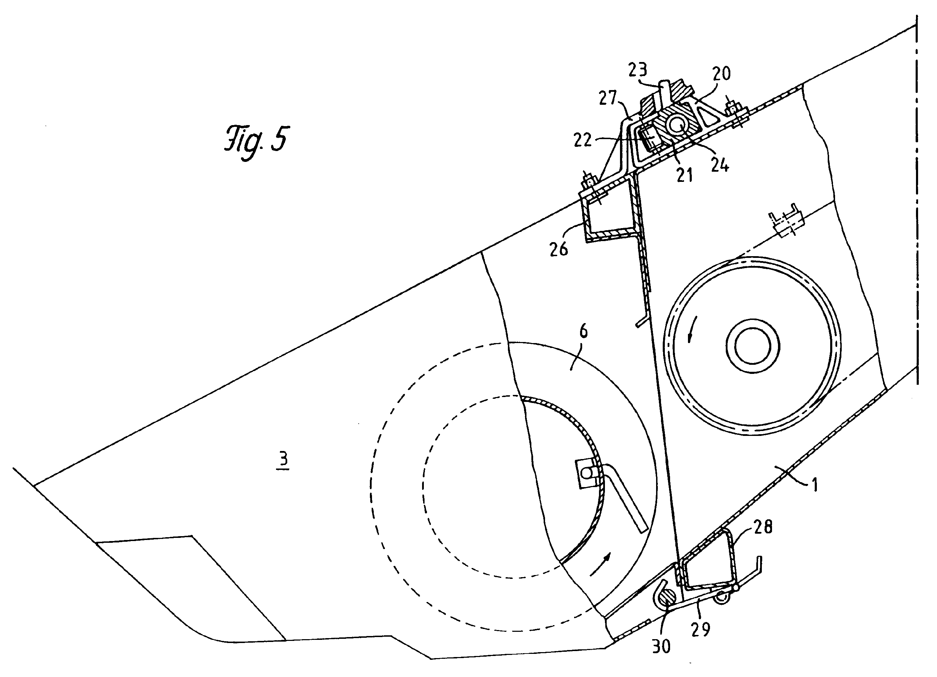

Bei dem nur teilweise dargestellten Mähdrescher nach den Figuren 1 bis 4 ist der Schrägfördererkanal mit 1 bezeichnet. An ihm ist ein schematisch dargestelltes Schneidwerk angeordnet, das in Fig. 1 in voller Arbeitsbreite dargestellt ist. Es überragt das auf die maximale Straßentransportbreite "a" ausgelegte Fahrgestell nach beiden Seiten um einen Überstand "b". Das Schneidwerk ist durch eine außermittige vertikale Trennfuge 2 in einen Schneidwerkteil 3 größerer Breite und einen Schneidwerkteil 4 kleinerer Breite geteilt. Jeder Schneidwerkteil weist eine nicht eigens bezeichnete Schneidwerksmulde, einen Messerbalken 5 und eine Einzugswalze 6 von entsprechender Länge auf. Die nur teilweise dargestellten Einzugswalzen sind außer an den Schneidwerkseitenwänden 7 und 8 im Bereich der Trennfuge 2 an nicht dargestellten Tragplatten gelagert. Die ebenfalls zu den Schneidwerkteilen gehörigen Haspeln 9 und 10 sind nur in Fig. 4 dargestellt.

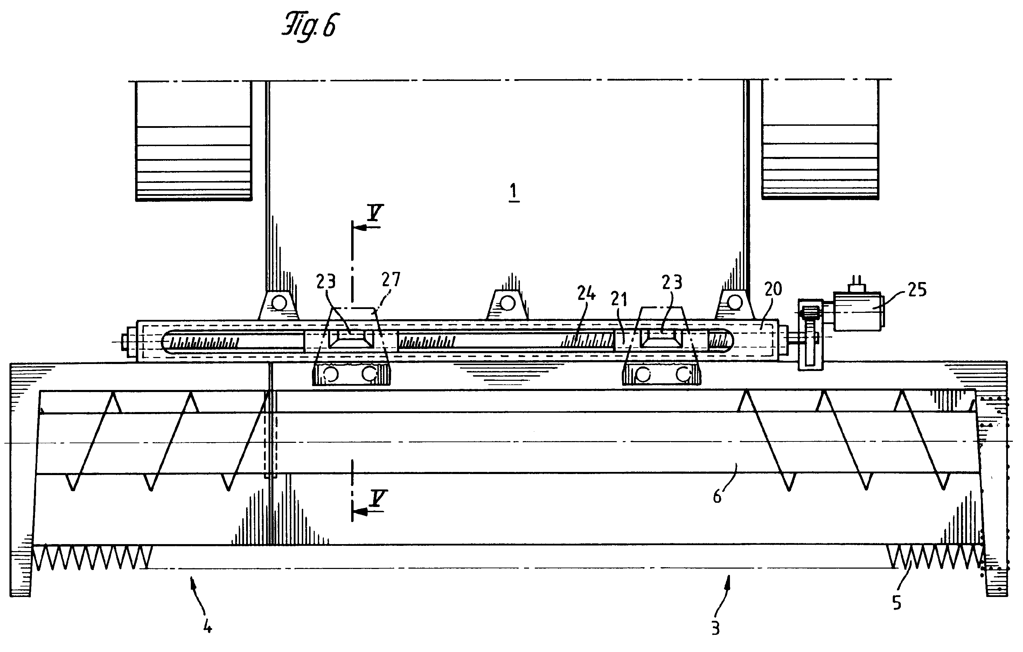

Der Schneidwerkteil 3 ist, wie aus den Figuren 5 und 6 näher ersichtlich, an dem Schrägfördererkanal 1 horizontal in Querrichtung verschiebbar gelagert. Der Schneidwerkteil 4 hingegen läßt sich mittels eines Gelenks 11, dessen Achse sich mit geringer Neigung gegenüber der Horizontalen in Fahrzeuglängsrichtung erstreckt, um 180° schwenken. Das Gelenk 11 verbindet zwei Lageraugen 12 und 13 von denen eines am Schneidwerkteil 4 und das andere am Schneidwerkteil 3 befestigt ist. An den Lageraugen sind ferner zwei gelenkig miteinander verbundene Gelenklaschen 14 und 15 angelenkt. Die Gelenklasche 15 kann mittels einer Kolbenzylindereinheit 16 verschwenkt werden, die anderenends an einem an dem Schneidwerkteil 3 befestigten Auge 17 angelenkt ist.

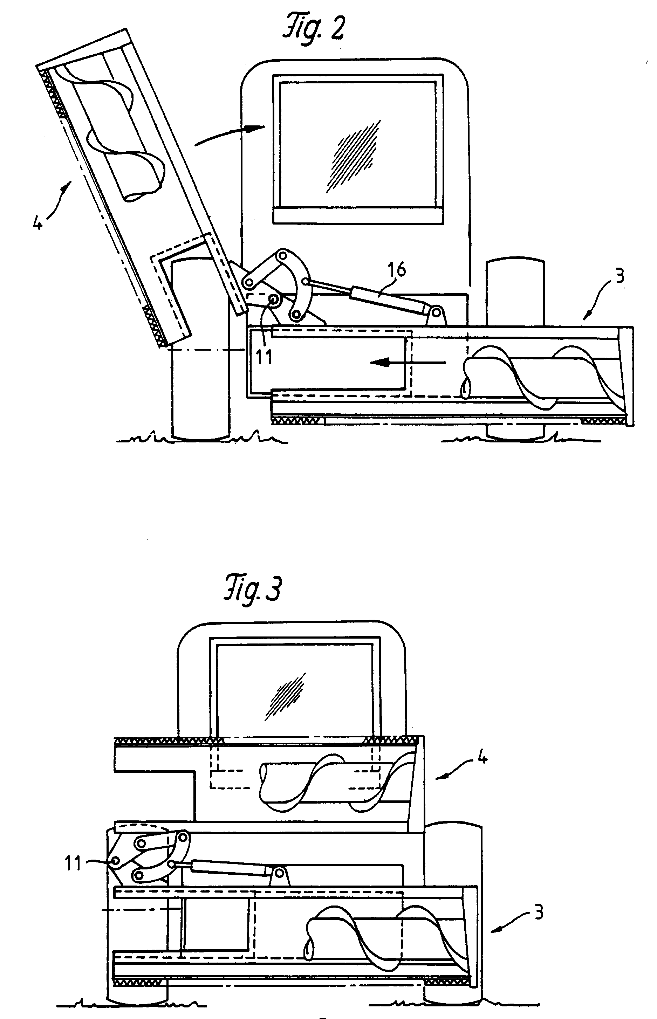

Um von der Arbeitsstellung nach Fig. 1 in die Transportstellung nach Fig. 3 zu kommen, wird gleichzeitig der Schneidwerkteil 3 nach links verschoben und der Schneidwerkteil 4 mittels der beschriebenen Gelenkanordnung und der Kolbenzylindereinheit 16 um volle 180° hochgeschwenkt, so daß er schließlich mit der Unterseite nach oben horizontal über dem Schneidwerkteil 3 zu liegen kommt, der inzwischen eine bezüglich des Fahrgestells mittige Stellung nach Fig. 3 erreicht hat. Fig. 2 zeigt eine Zwischenstellung. Der Schneidwerkteil 3 entspricht in seiner Breite in etwa der zulässigen Straßentransportbreite, die somit von dem Mähdrescher insgesamt in der Transportstellung eingehalten wird.

Fig. 4 zeigt u. a. die Unterbringung der Haspeln 9 und 10 in der Transportstellung. Jede Haspel ist zu beiden Seiten an einem hochschwenkbaren Tragarm 18 bzw. 19 angebracht und zwar so, daß sich die Haspellager mittels einer hydraulischen Verstelleinrichtung an den Tragarmen 18, 19 in Tragarmlängsrichtung verstellen lassen. In der Arbeitsstellung befindet sich die Haspel 9 weiter vorn und die Haspel 10 weiter hinten, so daß die in der Arbeitsstellung in Breitenrichtung aneinander anschließenden Haspeln koaxial angeordnet sind. Um sie jedoch in der Transportstellung unterbringen zu können, läßt sich die Haspel 9 wesentlich weiter zurück und die Haspel 10 wesentlich weiter nach vorn bewegen, als im Erntebetrieb erforderlich ist. Wie Fig. 4 zeigt, greift die Haspel 9 von oben zwischen die Tragarme 19 und der Achsabstand ist so groß, daß sich die Haspelschaufeln nicht berühren.

Die Figuren 5 und 6 geben ein Beispiel für die Befestigung des Schneidwerkteils 3 am Schrägfördererkanal 1 und für den Verschiebeantrieb. Längs des frontseitigen oberen Randes des Schrägfördererkanals 1 erstreckt sich eine Kastenprofilschiene 20 mit einem langgestreckten Schlitz an der Oberseite. In dieser Kastenprofilschiene sind Gleitstücke 21, die sich vorzugsweise an Gleitrollen 22 abstützen, verschiebbar gelagert. Die Gleitstücke haben jeweils einen durch den erwähnten Schlitz nach oben stehenden Aufnahmezapfen 23 und ein Innengewinde, das mit einer Gewindespindel 24 zusammenwirkt. Die Gewindespindel erstreckt sich durch die Kastenprofilschiene 20 und ist in deren Stirnwänden in Längsrichtung unbeweglich gelagert. An einem Ende der Gewindespindel 24 sitzt ein Antriebsrad, das von einem Motor 25 angetrieben wird. Andererseits sind an einer oberen Rahmenschiene 26 des Schneidwerkteils 3 zwei abgekröpfte Pratzen 27 befestigt, die mit ihren passenden Schlitzen über die Aufnahmezapfen 23 der Gleitstücke greifen. Der Schneidwerkteil 3 ist somit in der Querverschiebeeinrichtung eingehängt. Zur weiteren Verbindung des Schneidwerkteils 3 mit dem Schrägfördererkanal 1 ist an der Unterseite eine gebräuchliche Verspanneinrichtung vorgesehen. Diese umfaßt mehrere über je eine kurze Gelenklasche an einer Rahmenschiene 28 des Schrägfördererkanals gelagerte Spannhaken 29, die über entsprechende, am Schneidwerkteil 3 befestigte Spannbolzen greifen.

Zur Querverschiebung des Schneidwerkteils 3 wird zunächst die Verspanneinrichtung 29, 30 gelöst und dann der Motor 25 in Betrieb gesetzt. Entsprechend der Spindeldrehung wandern jetzt die beiden Gleitstücke 21 in der Kastenprofilschiene 20 und nehmen über die Pratzen 27 das Schneidwerkteil mit. Nach Erreichen der gewünschten Endstellung werden die beiden Bauteile an der Unterseite mittels der Verspanneinrichtung 29, 30 wieder fest verbunden.

**Patentansprüche**

1. Selbstfahrender Mähdrescher mit einem zweiteiligen frontseitigen Schneidwerk, wobei die beiden Schneidwerkteile (3,4) um eine in Fahrtrichtung weisende Achse aneinander schwenkbar gelagert sind und einer der Schneidwerkteile am Maschinenrahmen in Querrichtung verschiebbar gelagert ist, so daß zur Straßenfahrt die beiden aufeinander geklappten Schneidwerkteile zur Maschinenmitte hin verschoben werden können, wobei der verschiebbar gelagerte Schneidwerkteil (3) die maximal zulässige Gesamttransportbreite einer Erntemaschine und der klappbare Schneidwerkteil (4) eine geringere Breite aufweist.

2. Mähdrescher nach Anspruch 1, dadurch gekennzeichnet, daß eine mit Spindelmuttern zusammenwirkende, quer verlaufende horizontale Spindel (24) als Antriebsorgan für den quer verschiebbaren Schneidwerkteil (3) vorgesehen ist.

3. Mähdrescher nach Anspruch 2, dadurch gekennzeichnet, daß der quer verschiebbare Schneidwerkteil (3) in Gleitstücke (21) eingehängt ist, die mittels Rollen (22) längs der vorderen Oberkante eines frontseitig angeordneten Schrägförderkanals (1) geführt sind, und daß eine Verspanneinrichtung (29, 30) zur bodenseitigen Verspannung wenigstens dieses Schneidwerkteils (3) mit dem Schrägförderkanal (1) vorgesehen ist.

4. Mähdrescher nach Anspruch 1, dadurch gekennzeichnet, daß jeder Schneidwerkteil (3, 4) eine Haspel (9, 10) mit einer der jeweiligen Breite des Schneidwerkteils entsprechenden Länge aufweist, die an nach vorn weisenden, auf und ab schwenkbaren Tragarmen (18, 19) gelagert sind, und daß die eine Haspel (10) an ihren Tragarmen (19) so weit nach vorn zum Tragarmende hin und die andere Haspel (9) an ihren Tragarmen (18) so weit nach hinten zum Tragarmlager hin verstellbar ist, daß die Haspeln (9, 10) in eine Transportstellung gebracht werden können, in der sie im wesentlichen hintereinander angeordnet sind.

**Claims**

1. Self-propelled combine harvester with a two-part front cutting mechanism, wherein the two cutting mechanism parts (3, 4) are pivotally mounted on one another round a shaft pointing in the direction of travel and one of the cutting mechanism parts is transversely displaceably mounted on the machine frame so that, for road travel, the two cutting mechanism parts which are hinged to one another can be displaced toward the centre of the machine, the displaceably mounted cutting mechanism part (3) having the maximum permitted overall transporting width of a harvesting machine and the hinged cutting mechanism part (4) having a smaller width.

2. Combine harvester according to claim 1, characterised in that a transversely extending horizontal spindle (24) cooperating with spindle nuts is provided as a driving member for the transversely displaceable cutting mechanism part (3).

3. Combine harvester according to claim 2, characterised in that the transversely displaceable cutting mechanism part (3) is suspended in sliding members (21) which are guided by means of rollers (22) along the front upper edge of an oblique conveying channel (1) arranged on the front side and in that a fixing device (29, 30) is provided for fixing at least this cutting mechanism part (3) to the oblique conveyor channel (1) on the floor side.

4. Combine harvester according to claim 1, characterised in that each cutting mechanism part (3, 4) has a winder (9, 10) with a length corresponding to the respective width of the cutting mechanism part, the winders (9, 10) being mounted on forwardly pointing holding arms (18, 19) which can be pivoted up and down and in that one winder (10) is adjustable on its holding arms (19) so far forward toward the holding arm end and the other winder (9) is adjustable on its holding arms (18) so far rearwardly to the holding arm bearing that the winders (9, 10) can be brought into a transporting position in which they are arranged substantially one behind the other.

**Revendications**

1. Moissonneuse-batteuse automotrice, comportant un dispositif de coupe frontal en deux parties, les deux parties (3,4) du dispositif de coupe étant montées pivotantes, l'une contre l'autre, autour d'un axe s'étendant dans le sens de la marche, et une des parties du dispositif de coupe étant montée sur le bâti de machine de façon déplaçable en direction transversale, de sorte que, pour la marche sur route, les deux parties du dispositif de coupe repliées l'une sur l'autre peuvent être déplacées vers le centre de la machine, la partie (3) du dispositif de coupe montée mobile présentant la largeur de transport totale maximale permise d'une moissonneuse, et la partie repliable (4) du dispositif de coupe, une largeur plus faible.

2. Moissonneuse-batteuse selon la revendication 1, caractérisée en ce qu'un arbre fileté horizontal transversal (24), coopérant avec des écrous, est prévu en tant qu'organe d'entraînement pour la partie (3) du dispositif de coupe transversalement mobile.

3. Moissonneuse-batteuse selon la revendication 2, caractérisée en ce que la partie (3) du dispositif de coupe transversalement mobile est suspendue dans des pièces à coulisse (21), qui sont guidées, au moyen de rouleaux (22), le long du bord supérieur avant d'un canal d'alimentation incliné (1), agencé frontalement, et en ce qu'un dispositif de fixation (29,30) est prévu pour la fixation, du côté du fond, d'au moins cette partie (3) du dispositif de coupe au canal d'alimentation incliné (1).

4. Moissonneuse-batteuse selon la revendication 1, caractérisée en ce que chaque partie (3,4) du dispositif de coupe présente un rabatteur (9,10) ayant une longueur correspondant à la largeur respective des parties du dispositif de coupe, rabatteurs qui sont montés sur des bras de support (18,19) dirigés vers l'avant et pouvant pivoter de haut en bas, et en ce qu'un rabatteur (10) sur ses bras de support (19) est réglable vers l'avant, par rapport à l'extrémité des bras de support, et l'autre rabatteur (9) sur ses bras de support (18) est réglable vers l'arrière, par rapport au palier des bras de support, de sorte que les rabatteurs (9,10) peuvent être amenés dans une position de transport, dans laquelle ils sont agencés, généralement, l'un derrière l'autre.

*Fig. 4*

18
9
12
11
13
19
10
6
3
1

*Fig. 1*

b
a
b

4
11
14
15
16
17
3
8
1
12
13
7
2
6
5

*Fig. 2*

*Fig. 3*

Fig. 5

EP 0 373 406 B1

Fig. 6

EP 0 373 406 B1